# EUROPEAN PATENT APPLICATION

(11) **EP 2 822 315 A1**
(43) Date of publication of application: **07.01.2015**
(21) Application number: 13755081.0
(22) Date of filing: 28.02.2013
(51) Int. Cl.: H04W 16/32, H04W 72/04

(54) **MOBILE COMMUNICATION SYSTEM**

(30) Priority: 01.03.2012 JP 2012045496
(71) Applicant: NTT DOCOMO, INC., Chiyoda-ku Tokyo 100-6150 (JP)
(72) Inventor: TAKAHASHI, Hideaki, Tokyo 100-6150 (JP); YAGYU, Kengo, Tokyo 100-6150 (JP)
(74) Representative: Hoffmann Eitle
(86) International application number: PCT/JP2013/055446
(87) International publication number: WO 2013/129583

(57) **Abstract**

The present invention achieves optimal CA in terms of both mobility and throughput. In a mobile communication system according to the present invention, a cell #1/#2 in which a CC#1/CC#2 is used and a cell #11 in which a CC#11 is used are provided, a coverage area of the cell #1/#2 and a coverage area of the cell #11 are configured to geographically overlap each other, the coverage area of the cell #1/#2 is configured to be larger than the coverage area of the cell #11, and the cell #1/#2 has at least one of characteristics of: the used frequency band is high; a height of a transmission-reception antenna is high; a gain of the transmission-reception antenna is great; a directivity of the transmission-reception antenna is different; a transmission power is great; and a receiving sensitivity is great, compared to the cell #11.

## Description

### TECHNICAL FIELD

The present invention relates to a mobile communication system.

### BACKGROUND ART

Performing "CA (Carrier Aggregation)" has been studied in a mobile communication system of LTE (Long Term Evolution)-Advanced which is being specified in 3GPP.

In the LTE-Advanced mobile communication system, a mobile station UE is configured to be capable of performing CA by simultaneously using multiple "Component Carriers (CCs)" of different frequency bands between the mobile station UE and a single radio base station eNB.

When the CA is performed, the mobile station UE is configured to set one of multiple CCs as a PCC (Primary Component Carrier) and set the other CCs as SCCs (Secondary Component Carriers), according to an instruction from the radio base station.

Moreover, in the LTE-Advanced mobile communication system, consideration is given of disposing of one or multiple picocells in a high-traffic area in a coverage area of a macrocell.

### PRIOR ART DOCUMENT

### PATENT DOCUMENT

PATENT DOCUMENT 1: Japanese Patent Application No. 2010-003423

### NON-PATENT DOCUMENT

Non-patent document 1: 3GPP TS 36.814
Non-patent document 2: 3GPP TS 36.912

### SUMMARY OF THE INVENTION

However, in the current LTE-Advanced, there is no specification on how to set the macrocell and the picocell to achieve optimal CA in terms of both mobility and throughput.

The present invention has been made in view of the problem described above and an objective thereof is to provide a mobile communication system capable of achieving optimal CA in terms of both mobility and throughput.

A first feature of the present invention is summarized as a mobile communication system configured such that a mobile station is capable of performing CA by simultaneously using a first carrier of a first frequency band and a second carrier of a second frequency band. Here, a first cell in which the first carrier is used and a second cell in which the second carrier is used are provided, a coverage area of the first cell and a coverage area of the second cell are configured to geographically overlap each other, the coverage area of the first cell is configured to be larger than the coverage area of the second cell, and the first cell has at least one of characteristics that: the used frequency band is high; a height of a transmission-reception antenna is high; a gain of the transmission-reception antenna is high; a directivity of the transmission-reception antenna is different; a transmission power is great; and a receiving sensitivity is great, compared to the second cell.

### BRIEF DESCRIPTION OF THE DRAWINGS

[Fig. 1] Fig. 1 is an overall configuration diagram of a mobile communication system in a first embodiment of the present invention.
[Fig. 2] Fig. 2 is an overall configuration diagram of a mobile communication system in a second embodiment of the present invention.
[Fig. 3] Fig. 3 is an overall configuration diagram of a mobile communication system in a third embodiment of the present invention.

### MODE FOR CARRYING OUT THE INVENTION

### (Mobile Communication System of First Embodiment of the Present Invention)

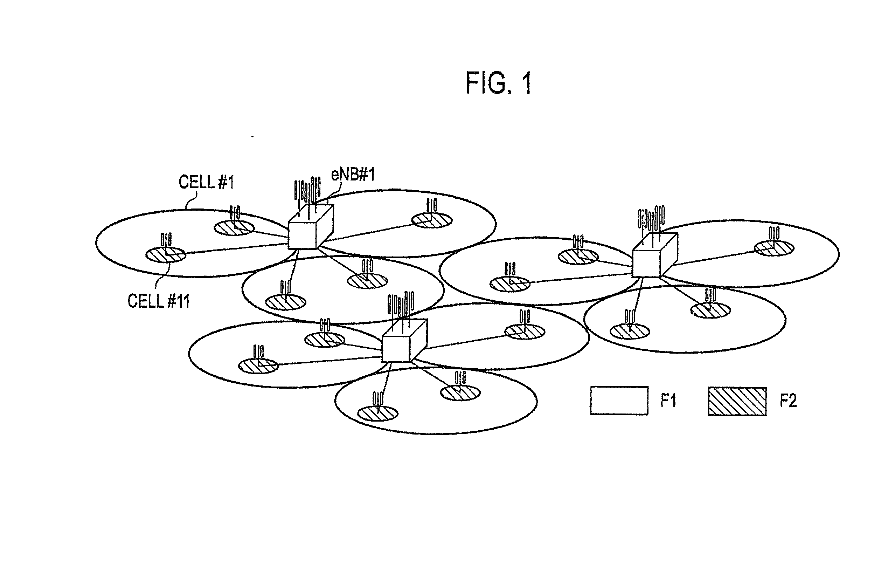

A mobile communication system of a first embodiment of the present invention is described with reference to Fig. 1. The mobile communication system of the embodiment is a LTE-advanced mobile communication system.

Note that, in the mobile communication system of the embodiment, a mobile station UE is configured to be capable of transmitting and receiving signals to and from a radio base station eNB#1 by simultaneously using a CC of a frequency band F1 and a CC of a frequency band F2, i.e. is configured to be capable of performing CA.

As shown in Fig. 1, in the mobile communication system of the embodiment, a cell #1 and the like are provided under the radio base station eNB#1 as macrocells and a cell #11 and the like are provided under the radio base station eNB#1 as picocells.

Here, the CC of the frequency band F1 is used in the macrocells of the cell #1 and the like and the CC of the frequency band F2 is used in the picocells of the cell #11 and the like.

In the LTE-Advanced mobile communication system, for example, a 800 MHz frequency band, a 1.5 GHz frequency band, a 1.7 GHz frequency band, a 2 GHz frequency band, a 3.4 to 3.6 GHz frequency band, a 4.4 to 4.9 GHz frequency band, and the like are assumed to be used as the frequency bands F1 and F2.

Moreover, for example, the frequency bandwidth of each CC may be any one of 6 RB (Resource Blocks), 15 RB, 25 RB, 50 RB, 75 RB, and 100RB. Note that 1 RB is equal to 180 kHZ.

Furthermore, in the mobile communication system of the embodiment, a coverage area of the cell #1 and a coverage area of the cell #11 are configured to geographically overlap each other.

Note that, in the mobile communication system of the embodiment, the coverage area of the cell #1 is configured to be larger than the coverage area of the cell #11.

In addition, the mobile communication system of the embodiment may be configured such that the same PCI (Physical Cell Identity) is used in the cell #1 and the cell #11 whose coverage areas overlap each other.

Alternatively, the mobile communication system of the embodiment may be configured such that different PCIs are used in the cell #1 and the cell #11 whose coverage areas overlap each other.

In the mobile communication system of the embodiment, the mobile station UE can perform CA only in an area where the coverage area of the cell #1 and the coverage area of the cell #11 overlap each other.

Meanwhile, in the mobile communication system of the embodiment, the mobile station UE is configured to perform communication using only the CC of the frequency band F1, i.e. cannot perform CA, in an area where the coverage area of the cell #1 overlaps no coverage area of the cell #11.

The cell #1 may have a characteristic that the used frequency band is high compared to the cell #11. In other words, the frequency band F1 used in the cell #1 may be a frequency band higher than the frequency band F2 used in the cell #11.

Moreover, the cell #1 may have a characteristic that the height of a transmission antenna is high compared to the cell #11. In other words, the gain of the transmitting and receiving antenna used in the cell #1 may be higher than the gain of a transmitting and receiving antenna used in the cell #11.

Furthermore, the cell #1 may have a characteristic that the directivity of the transmission-reception antenna is different compared to the cell #11. In other words, the directivity of the transmission-reception antenna used in the cell #1 may be different from the directivity of the transmission-reception antenna used in the cell #11.

Moreover, the cell #1 may have a characteristic that a transmission power is great compared to the cell #11. In other words, the transmission power in the cell #1 may be greater than a transmission power in the cell #11.

Furthermore, the cell #1 may have a characteristic that a receiving sensitivity is high compared to the cell #11. In other words, the receiving sensitivity in the cell #1 may be higher than a receiving sensitivity in the cell #11.

The cell #1 may have at least one of the characteristics described above compared to the cell #11.

In the mobile communication system of the first embodiment of the present invention, consideration is given to propagation characteristics of the CCs of the respective frequency bands and a high throughput can be achieved by performing CA in the area where the coverage area of the cell #1 and the coverage area of the cell #11 overlap each other, while and a wide coverage area can be achieved by the cell #1 in which the CC of the frequency band F1 is used.

### (Mobile Communication System of Second Embodiment of the Present Invention)

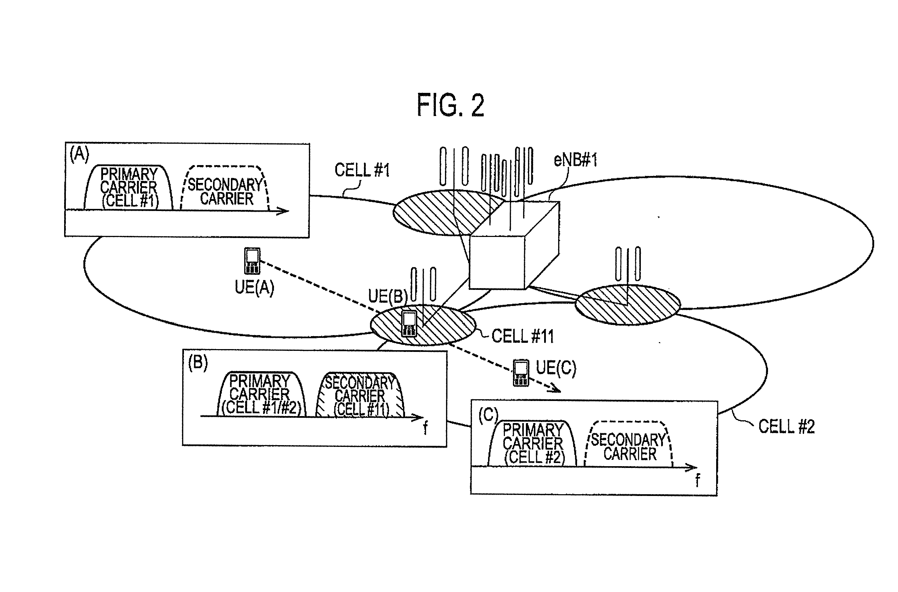

A mobile communication system of a second embodiment of the present invention is described with reference to Fig. 2. The mobile communication system of the embodiment is described below while focusing on differences from the mobile communication system of the first embodiment of the present invention.

As shown in Fig. 2, in the mobile communication system of the embodiment, as in the mobile communication system of the first embodiment of the present invention, a cell #1, a cell #2, and the like are provided under a radio base station eNB#1 as macrocells and a cell #11 and the like are provided under the radio base station eNB#1 as picocells.

Moreover, in the mobile communication system of the embodiment, the cell #11 may be provided at a boundary between coverage areas of the cells #1 and #2 managed by the same radio base station eNB#1.

Here, the radio base station eNB#1 may be configured to set the cell #11 as Scell for a mobile station UE in a coverage area of the cell #11.

As a result of this setting, a throughput at the boundary between the coverage areas of the cells #1 and #2 can be improved by transmitting U-Plane data through Scell.

A frequency band F1 used in the cells #1 and #2 may be a frequency band lower than a frequency band F2 used in the cell #11. Alternatively, the frequency band F1 used in the cells #1 and #2 may be a frequency band higher than the frequency band F2 used in the cell #11.

### (Mobile Communication System of Third Embodiment of the Present Invention)

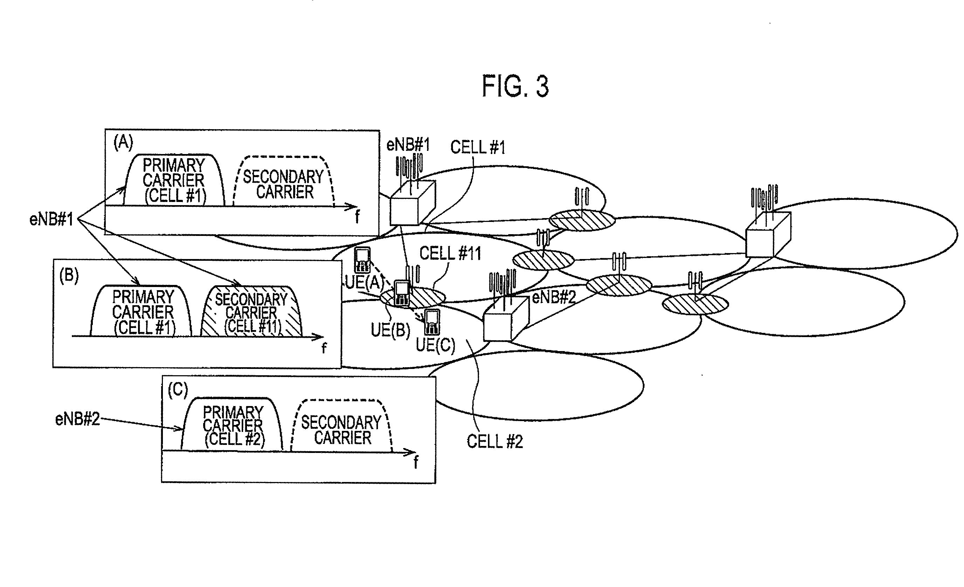

A mobile communication system of a third embodiment of the present invention is described with reference to Fig. 3. The mobile communication system of the embodiment is described below while focusing on differences from the mobile communication system of the first embodiment of the present invention.

As shown in Fig. 3, in the mobile communication system of the embodiment, a cell #1 and the like are provided under a radio base station eNB#1 as macrocells and a cell #11 and the like are provided under the radio base station eNB#1 as picocells.

Meanwhile, in the mobile communication system of the embodiment, a cell #2 and the like are provided under a radio base station eNB#2 as macrocells.

Although the cell #11 which is the picocell is managed by the radio base station eNB#1 in the example of Fig. 3, the cell #11 may be managed by the radio base station eNB#2. In the embodiment, the cell #11 which is the picocell is explained as being managed by the radio base station eNB#1.

Moreover, in the mobile communication system of the embodiment, the cell #11 may be provided at a boundary between a coverage area of the cell #1 managed by the radio base station eNB#1 and a coverage area of the cell #2 managed by the radio base station eNB#2.

Here, the radio base station eNB#1 may be configured to set the cell #11 as a Scell for a mobile station UE when the mobile station UE enters a coverage area of the cell #11 from the coverage area of the cell #1.

Specifically, the radio base station eNB#1 may be configured to set the picocell (cell #11) as the Scell for the mobile station UE when the mobile station UE is in an area where the coverage areas respectively of the macrocell (cell #1) and the picocell (cell #11) under the same radio base station eNB#1 overlap each other.

Moreover, the set Scell may be configured to be deleted when the mobile station UE moves out from the coverage area of the cell #11 to the coverage area of the cell #2.

A frequency band F1 used in the cells #1 and #2 may be a frequency band lower than a frequency band F2 used in the cell #11. Alternatively, the frequency band F1 used in the cells #1 and #2 may be a frequency band higher than the frequency band F2 used in the cell #11.

In the mobile communication system of the third embodiment of the present invention, a throughput at the boundary between the coverage areas of the cells #1 and #2 can be improved by transmitting U-Plane data through the Scell.

The features of the above-described embodiment may also be expressed as follows.

A first feature of this embodiment is summarized as a mobile communication system configured such that a mobile station is capable of performing CA by simultaneously using a CC (a first carrier) of a frequency band F1 (a first frequency band) and a CC (a second carrier) of a frequency band F2 (a second frequency band). Here, a cell #1/#2 (a first cell) in which the CC of the frequency band F1 is used and a second cell #11 in which the CC of the frequency band F2 is used are provided, a coverage area of the cell #1/#2 and a coverage area of the cell #11 are configured to geographically overlap each other, the coverage area of the cell #1/#2 is configured to be larger than the coverage area of the cell #11, and the cell #1/#2 has at least one of characteristics that: the used frequency band is high; a height of a transmission-reception antenna is high; a gain of the transmission-reception antenna is high; a directivity of the transmission-reception antenna is different; a transmission power is great; and a receiving sensitivity is great, compared to the cell #11.

In the first feature of this embodiment, the cell #11 may be provided at a boundary between the coverage areas of the cells #1/#2 managed by a same radio base station eNB#1.

In the first feature of this embodiment, the radio base station eNB#1 may be configured to set the cell #11 as a Scell for the mobile station UE in the coverage area of the cell #11.

In the first feature of this embodiment, the cell #11 may be provided at a boundary between the coverage area of the cell #1 managed by a radio base station eNB#1 (a first radio base station) and the coverage area of the cell #2 managed by a radio base station eNB#2 (a second radio base station).

In the first feature of this embodiment, the radio base station eNB#1 may be configured to set the cell #11 as a Scell for the mobile station UE when the mobile station UE enters the coverage area of the cell #11 from the coverage area of the cell #1 managed by the radio base station eNB#1, and the set Scell is configured to be deleted when the mobile station UE moves out from the coverage area of the cell #11 to the coverage area of the cell #2 managed by the radio base station eNB#2.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-045496 (filed on March 1, 2012) is incorporated by reference in the present specification.

### INDUSTRIAL APPLICABILITY

As described above, the present invention can provide a mobile communication system which can achieve optimal CA in terms of both mobility and throughput.

### EXPLANATION OF THE REFERENCE NUMERALS

- UE: mobile station
- eNB#1, eNB#2: radio base station
- #1, #2: macrocell
- #11: picocell

## Claims

1. A mobile communication system configured such that a mobile station is capable of performing CA (Carrier Aggregation) by simultaneously using a first carrier of a first frequency band and a second carrier of a second frequency band, wherein
a first cell in which the first carrier is used and a second cell in which the second carrier is used are provided,
a coverage area of the first cell and a coverage area of the second cell are configured to geographically overlap each other,
the coverage area of the first cell is configured to be larger than the coverage area of the second cell, and
the first cell has at least one of characteristics that: the used frequency band is high; a height of a transmission-reception antenna is high; a gain of the transmission-reception antenna is high; a directivity of the transmission-reception antenna is different; a transmission power is great; and a receiving sensitivity is great, compared to the second cell.

2. The mobile communication system according to claim 1, wherein the second cell is provided at a boundary between the coverage areas of the first cells managed by a same radio base station.

3. The mobile communication system according to claim 2, wherein the radio base station is configured to set the second cell as a Scell for the mobile station in the coverage area of the second cell.

4. The mobile communication system according to claim 1, wherein the second cell is provided at a boundary between the coverage area of the first cell managed by a first radio base station and the coverage area of the first cell managed by a second radio base station.

5. The mobile communication system according to claim 4, wherein
the first radio base station is configured to set the second cell as a Scell for the mobile station when the mobile station enters the coverage area of the second cell from the coverage area of the first cell managed by the first radio base station, and
the set Scell is configured to be deleted when the mobile station moves out from the coverage area of the second cell to the coverage area of the first cell managed by the second radio base station.
